# EUROPÄISCHE PATENTSCHRIFT

(11) **EP 1 732 026 B1**
(45) Veröffentlichungstag und Bekanntmachung des Hinweises auf die Patenterteilung: **05.08.2009**
(21) Anmeldenummer: 05012099.7
(22) Anmeldetag: 04.06.2005
(51) Int. Cl.: G06K 7/00

(54) **Schaltungsanordnung zur Verwendung in RF-Transpondern oder Remote Sensoren, sowie Verfahren zum Steuern einer Anzahl derartiger Transponder oder Sensoren**
Circuit for use in RF transponders or remote sensors, and method for controlling a plurality of such transponders or sensors.
Circuit pour l'utilisation dans des transpondeurs RF ou des capteurs à distance, et méthode pour contrôler une pluralité de tels transpondeurs ou capteurs.

(43) Veröffentlichungstag der Anmeldung: 13.12.2006
(73) Patentinhaber: ATMEL Germany GmbH, 74072 Heilbronn (DE)
(72) Erfinder: Ziebertz, Dirk, Dipl.-Ing., 74246 Eberstadt (DE)
(74) Vertreter: Müller, Wolf-Christian

(56) Entgegenhaltungen:
- US-A- 6 091 342
- US-A1- 2002 104 890
- US-A1- 2003 137 400
- US-B1- 6 233 169
- US-B1- 6 404 325

## Beschreibung

Die Erfindung betrifft eine Schaltungsanordnung, insbesondere für RF-Transponder oder Remote Sensoren, mit einer Empfangseinrichtung zum Empfangen eines elektrischen Steuersignals, einem ersten Speichermittel zum Speichern eines Steuerzustands der Schaltungsanordnung in Abhängigkeit von dem Steuersignal und einem zweiten Speichermittel zum Halten des Steuerzustands bei mangelnder Spannungsversorgung der Schaltungsanordnung, das zum Speichern elektrischer Energie ausgebildet ist, sowie die Verwendung einer solchen Schaltungsanordnung in einer Transponder-Vorrichtung, insbesondere einem RF-Transponder, oder einem Remote Sensor.

Weiterhin betrifft die Erfindung eine Transponder-Vorrichtung und einen Remote Sensor mit einer solchen Schaltungsanordnung sowie eine Anordnung derartiger Transponder-Vorrichtungen bzw. Sensoren mit einer Basisstation zumindest zum Senden von Steuersignalen an die Transponder-Vorrichtungen und/oder Remote Sensoren.

Schließlich betrifft die Erfindung ein Verfahren zum Steuern einer Transponder-Vorrichtung oder eines Remote Sensors, wobei zumindest ein Steuersignal mittels einer Empfangseinrichtung der Transponder-Vorrichtung oder des Remote Sensors empfangen und ein entsprechender Steuerzustand der Transponder-Vorrichtung oder des Remote Sensors in Abhängigkeit von dem Steuersignal durch ein erstes Speichermittel einer Schaltungsanordnung der Transponder-Vorrichtung oder des Remote Sensors gespeichert wird und wobei im Falle mangelnder Spannungsversorgung der Transponder-Vorrichtung oder des Remote Sensors der Steuerzustand während einer Zeit *t* durch ein zweites Speichermittel der Schaltungsanordnung gespeichert wird, sowie ein Verfahren zum Steuern einer Mehrzahl von Transponder-Vorrichtungen und/oder Remote Sensoren in einem gemeinsamen elektromagnetischen Wellenfeld.

Transponder werden heutzutage auf vielfältigen Gebieten der Technik bevorzugt im Rahmen berührungsloser Identifikationssysteme eingesetzt. Insbesondere der Einsatz berührungsloser Systeme auf der Basis einer Datenübertragung per Funk bei Frequenzen im Radiobereich (RF) eignet sich überall dort, wo eine automatische Kennzeichnung, Erkennung, Abfrage, Lagerung, Überwachung oder ein entsprechender Transport erfolgen soll. Mit Hilfe von Transpondern sind Behälter, Maschinen, Fahrzeuge usw. individuell markier- und identifizierbar. Daher ermöglicht es die Radiofrequenz-Identifikation (RFID), kontaktlos, unabhängig und ohne Sichtverbindung zu einem auf dem Transponder befindlichen Datenträger, der die abzufragenden Informationen enthält, Objekte zu identifizieren, egal ob sich der Transponder auf dem Objekt befindet oder im Fördermittel (z.B. Behälter, Palette) integriert ist. Da selbst widrige Witterungseinflüsse für elektromagnetische Wellen kein Hindernis darstellen, lassen sich Daten auch über relativ große Abstände von bis zu 2 m oder mehr sicher und fehlerfrei erfassen. Eine weitere wichtige Anwendung für RFID-Systeme liegt auf dem Gebiet der Kfz-Technik im Bereich von Wegfahrsperren, bei denen der Transponder im Kfz-Schlüssel eingebaut ist.

Ein Radiofrequenz-Identifikationssystem wird allgemein aus zwei Komponenten gebildet, dem in der Regel passiven Transponder ohne eigene Spannungsversorgung ― auch als tag oder label bezeichnet ―, der an den zu identifizierenden Objekten angebracht wird und der in dieser Form keine eigene Energieversorgung besitzt, und einem stationären oder mobilen Erfassungsgerät (*reader*). Der Transponder als Herzstück eines solchen Systems beinhaltet einen integrierten Schaltkreis (IC) als Datenträger sowie eine Sende- und Empfangseinrichtung in Form einer Antenne; die Erfassungsgeräte beinhalten Steuereinheit, Frequenzmodul sowie mindestens eine Sende- und Empfangs-Antenne.

Darüber hinaus bietet der Transponder die Möglichkeit zur Datenspeicherung. Die Daten lassen sich - im Gegensatz zu beispielsweise auf Barcodes gespeicherten Informationen - verändern oder ergänzen. Der Datenaustausch zwischen Transponder und Reader erfolgt über elektromagnetische Felder in verschiedenen Frequenzbereichen, vorzugsweise ― wie erwähnt ― jedoch im RF-Bereich, vornehmlich im UHF-oder Mikrowellenbereich (MW).

Sollen mit Hilfe eines passiven RFID-Systems mehrere in einem gemeinsamen RF-Feld befindliche Transponder ausgelesen werden, so kommen eine sog. Antikollisions-Prozeduren zum Einsatz. Mit Hilfe einer derartiger Prozeduren werden die Transponder seriell ausgelesen. Nach dem Auslesen eines bestimmten Datensatzes, beispielsweise einer Identifikationsnummer (ID) aus dem integrierten Schaltkreis des Transponders, wird der ausgelesene Transponder in einen inaktiven Mode gesetzt, d.h. für eine Kommunikation mit dem Reader (im Folgenden auch als Basisstation bezeichnet) stumm geschaltet, so dass anschließend weitere Transponder möglichst störungsfrei ausgelesen werden können (vgl. Finkenzeller, RFID-Handbuch, 3. Aufl., Hanser/München).

Da die passiven Transponder über das RF-Feld mit Energie versorgt werden müssen, ist bei derartigen Anwendungen dafür zu sorgen, dass die Transponder während der gesamten Prozedur ihre Steuerzustände halten oder sich zumindest nach einem erfolgreichen Auslesen des Datensatzes nicht mehr an der Kommunikation mit dem Reader beteiligen. Dieser Aspekt ist vor allem dann kritisch, wenn sich die Trägerfrequenzen im UHF- oder im Mikrowellenbereich bewegen und die Lage der Transponder im Raum sich relativ zum Reader.

Im UHF- und MW-Bereich entstehen durch Überlagerungseffekte auf Grund von Reflexionen Raumbereiche, in denen die Energieversorgung der Transponder durch das Trägersignal nicht mehr sichergestellt ist. Solche Raumbereiche müssen dann durch einen auf dem Transponder-IC befindlichen Energiespeicher, in der Regel einen Kondensator, überbrückt werden. Da die mit einer Überbrückung derartiger Raumbereiche verbundenen Zeiten recht groß werden können und regelmäßig im Sekundenbereich liegen, nehmen solche Speicher aufgrund der großen erforderlichen Kapazitäten (Größenordnung µF) ausgedehnte Flächen auf dem IC in Anspruch, so dass entsprechende Lösungen konstruktiv unrentabel sind. Daher gab es in der Vergangenheit Bestrebungen sicherzustellen, dass derartige Versorgungslöcher sich nicht negativ auf die Antikollisions-Prozedur auswirken.

Aus der US 5,963,144 ist ein Transponder und eine Schaltungsanordnung bzw. ein Verfahren zu dessen Steuerung bekannt, wobei der Transponder nach seiner Erkennung (Registrierung) während einer Zeit *t* vollständig abgeschaltet wird, wobei *t* ungefähr 2 s beträgt. Unabhängig davon, ob die Antikollisions-Prozedur abgeschlossen ist oder nicht, klinkt sich der entsprechende Transponder nach Ablauf dieser Zeit automatisch wieder mit in die Kommunikation ein. Das Abschalten der Transponder erfolgt gemäß der US 5,963,144 durch ein Verstellen der Eingangsimpedanz des Transponders, so dass insbesondere als nachteilig anzusehen ist, dass dieser während der fraglichen Zeit nicht anderweitig angesprochen werden kann. Darüber hinaus können im Zuge von Versorgungslücken undefinierte Steuerzustände des Transponders auftreten, die nach Ablauf der Zeit *t* möglicherweise an das Gesamtsystem übertragen werden.

Die WO 03/063076 offenbart einen gattungsgemäßen passiven RFID-Transponder und ein Verfahren für dessen Betrieb, bei dem zur Überbrückung von Versorgungslücken ein Statushaltemittel vorhanden ist, das ein Speichermittel in Form eines Kondensators zum Reproduzieren eines logischen Eingangssignals aufweist. Dabei entspricht eine logische Eins einem geladenen Kondensatorzustand, während eine logische Null einem ungeladenen Kondensatorzustand entspricht. Nachteilig hierbei ist, dass das vorgeschlagene Statushaltemittel grundsätzlich erst nach Ablauf einer charakteristischen Leakage-Zeit des Kondensators wieder zum Halten eines (neuen) Steuerzustands bereit ist.

Obwohl der der Erfindung zugrunde liegende Stand der Technik samt dessen inhärenter Nachteile vorstehend ausschließlich in Bezug auf Transponder dargelegt wurde, gelten dieselben Überlegungen auch für sog. Remote Sensoren, d.h. Sensoren, die ohne eine Kabelverbindung zur Daten- und Energieübertragung mit einer Basisstation frei in einem Messraum ausgebracht sind. Bei solchen Remote Sensoren kann sich beispielsweise um Temperatur-, Bewegungs-, Partikelsensoren oder dgl. handeln, die wenigstens Messenweisungen von der Basisstation empfangen und Messwerte an diese übertragen müssen.

Aus der Druckschrift US 6,233,169 B1 das den Oberbegriff der Ansprüche 1 und 27 bildet, geht eine gattungsgemäße Schaltungsanordnung zum Halten von Daten hervor, bei der ein Kondensator zwischen zwei Transistor-Schaltmitteln angeordnet ist, die wechselweise ein- bzw. ausgeschaltet werden und eine Schleusenfunktion zum Laden des Kondensators und zum Bereitstellen der gehaltenen Daten an ein Bussystem ausüben. Zum Steuern der Transistoren und der Kondensatoraufladung sind zwei zusammenwirkende Steuersignal erforderlich, ohne die, d.h. bei weggefallener Energieversorgung die Schaltung nicht arbeitet. Zudem ist ein gezieltes Entladen des Kondensators (z.B. für eine Reset-Funktion) nicht möglich.

Die Druckschrift US 2002/0104890 A1 beschreibt eine IC-Karte, die u.a. ein RAM und einen nicht-flüchtigen Speicher umfasst. Nach Maßgabe einer DMA-Schaltung und einer CPU werden erste Daten In das RAM bzw, zweite Daten in den nicht-flüchtigen Speicher geschrieben.

Der Erfindung liegt die Aufgabe zugrunde, einen Transponder oder einen Remote Sensor bzw. eine Anordnung von Transpondern und/oder Remote Sensoren sowie ein Verfahren zur dessen bzw. deren Steuerung unter Vermeidung der vorstehend aufgeführten Nachteile dahingehend weiter zu entwickeln, dass eine Steuerung der Transponder (Sensoren) durch eine Basisstation jederzeit möglich und eine Antikollisions-Prozedur für die Kommunikation mit der Basisstation sicher und fehlerfrei durchführbar ist.

Die Aufgabe wird bei einer Schaltungsanordnung gemäß Anspruch 1 gelöst. Diese Schaltungsanordnung für RF-Transponder oder Remote Sensoren, besitzt eine Empfangseinrichtung zum Empfangen eines elektrischen Steuersignals, ein erstes Speichermittel zum Speichern eines Steuerzustands der Schaltungsanordnung in Abhängigkeit von dem Steuersignal und ein zweites Speichermittel zum Halten des Steuerzustands bei mangelnder Spannungsversorgung der Schaltungsanordnung, das zum Speichern elektrischer Energie einen Kondensator aufweist, das mit einem Ausgang für ein Ausgangssignal der Schaltungsanordnung verbunden ist und das ein Schaltmittel aufweist, welches zum Aufladen des zweiten Speichermittels mit elektrischer Energie durch ein weiteres Steuersignal steuerbar ist. Das Schaltmittel und der Kondensator sind zueinander in Reihe sowie jeweils parallel zu und in Wirkverbindung mit dem Ausgang des ersten Speichermittels geschaltet, wobei das Schaltmittel mit seinem dem Kondensator abgewandten Anschluss auf einem zum Entladen des Kondensators nach Maßgabe des weiteren Steuersignals über das Schaltmittel geeigneten Potential liegt.

Hierbei weist das zweite Speichermittel ein Schaltmittel auf, das zum Auf- und Entladen des zweiten Speichermittels mit elektrischer Energie durch ein weiteres Steuersignal steuerbar ist. Bei einer erfindungsgemäßen Transponder-Vorrichtung und einem erfindungsgemäßen Remote Sensor ist zur Lösung der Aufgabe vorgesehen, dass diese bzw. dieser eine erfindungsgemäße Schaltungsanordnung beinhaltet, während eine Anordnung von Transponder-Vorrichtungen/Remote Sensoren der eingangs genannten Art zur Lösung der Aufgabe aus erfindungsgemäßen Transponder-Vorrichtungen/Remote Sensoren gebildet ist.

Darüber hinaus ist zur Lösung der Aufgabe ein Verfahren gemäß Anspruch 27 aufgezeigt. Bei diesem Verfahren der eingangs genannten Art ist vorgesehen, dass nach Maßgabe eines weiteren Steuersignals das zweite Speichermittel mit elektrischer Energie aufgeladen oder die dort gespeicherte elektrische Energie entladen wird. Zu dernselben Zweck wird weiterhin bei einem Verfahren zum Steuern einer-Mehrzahl von Transponder-Vorrichtungen und/oder Remote Sensoren jede Transponder-Vorrichtung und jeder Sensor gemäß dem vorstehend genannten Verfahren gesteuert.

Aufgrund der Tatsache, dass ein Steuerzustand der Schaltungsanordnung bzw. der Transponder-Vorrichtung durch ein zweites Speichermittel gehalten wird, ist erfindungsgemäß im Falle einer Versorgungslücke sichergestellt, dass es bei einer erfindungsgemäßen Vorrichtung bzw. im Zuge des erfindungsgemäßen Verfahrens aufgrund zumindest zeitweilig garantierter Datenhaltung zu keinerlei undefinierten Steukommt, was sich speziell im Rahmen einer Antikollisions-Prozedur beim Einsatz einer Mehrzahl von Transponder-Vorrichtungen in einem gemeinsamen Wellenfeld positiv bemerkbar macht. Aufgrund der erfindungsgemäß gegebenen Steuerbarkeit des zweiten Speichermittels bezüglich des Lade- bzw- Speicherzustands ist die Schaltungsanordnung zudem bei jedem neuen Setzen des so geschaffenen Statusregisters jeweils zum Halten des dann aktuellen Steuerzustands bereit.

Im Zuge einer Weiterbildung der erfindungsgemäßen Schaltungsanordnung ist vorgesehen, dass das erste Speichermittel ein schaltbares logisches Speichermittel und in bevorzugter Weiterbildung ein D-Flip-Flop (Verzögerungsglied) ist. Auf diese Weise lässt sich in einfacher und sicherer Weise ein wohl definiertes Steuersignal für eine erfindungsgemäße Transponder-Vorrichtung, beispielsweise zu deren Stumm-oder Aktivschaltung, bereitstellen. Vorteilhafter Weise ist das erste Speichermittel zudem durch ein weiteres Steuersignal, wie ein Reset-Signal, steuerbar, insbesondere in einen definierten Zustand (rück-)setzbar.

Das zweite Speichermittel zum Speichern elektrischer Energie weist nach einer bevorzugten Ausgestaltung der erfindungsgemäßen Schaltungsanordnung einen Kondensator auf. Damit ist erfindungsgemäß in besonders einfacher Weise sichergestellt, dass auch im Falle einer Versorgungslücke ein Speicherzustand des ersten Speichermittels erhalten bleibt, so dass die erfindungsgemäße Schaltungsanordnung auch in diesem Fall insbesondere für ein definiertes Kommunikationsverhalten des entsprechenden Transponders bzw. Sensors sorgt. Vorzugsweise ist dabei das zweite Speichermittel bei Ansteuerung mittels des weiteren Steuersignals, z.B. eines Reset-Signals, für das erste Speichermittel entladbar, um eine möglichst einfache Handhabbarkeit der Schaltungsanordnung zu gewährleisten.

Insbesondere im Zuge seiner Ausgestaltung als Kondensator sorgt das zweite Speichermittel für ein Reproduzieren eines Steuerzustands des ersten Speichermittels während einer Zeit *t* mit 0 < *t* ≤*t*ₘₐₓ, die durch eine charakteristische Entladungszeit des Kondensators bestimmt ist. Vorzugsweise beträgt *t*ₘₐₓ ungefähr 9 s, in einer äußerst bevorzugten Weiterbildung der Schaltungsanordnung beträgt *t* ungefähr 2 s. Dabei lassen sich auch längere Versorgungslücken problemlos überbrücken. Die vorstehend genannten Zeiten sind mit dem *leakage* L des Kondensators stark von der Temperatur T abhängig (L - e^{-T}).

Obwohl prinzipiell auch eine Ausbildung die erfindungsgemäßen Schaltungsanordnung als aktiv mit Spannung versorgte Schaltungsanordnung möglich ist, sieht eine vorteilhafte Weiterbildung der erfindungsgemäßen Schaltungsanordnung vor, dass die Empfangseinrichtung weiterhin zu Empfangen elektromagnetischer Energie zum Versorgen der Schaltungsanordnung ausgebildet ist. Eine derartige Ausbildung ermöglicht ein möglichst einfaches Design der Schaltungsanordnung, die auf diese Weise als eine rein passive Baugruppe ausgebildet ist.

Weiterhin kann erfindungsgemäß vorgesehen sein, dass eine erfindungsgemäße Schaltungsanordnung ein Schwellwert-Schaltmittel für die Auswertung eines dem Steuerzustand zugeordneten Spannungswerts besitzt, das zum Erzeugen eines logischen Ausgangssignals der Schaltungsanordnung ausgebildet ist. Das Schwellwert-Schaltmittel kann dabei alternativ als CMOS-Schaltstufe oder als Komparator ausgebildet sein, wobei die Schaltschwelle des Schwellwert-Schaltmittels vorzugsweise veränderbar ist. Auf diese Weise lässt sich die Funktion des erfindungsgemäßen Statusregisters einfach anwendungsspezifisch beeinflussen.

Entsprechend gilt für das erfindungsgemäße Verfahren, dass zum Erzeugen des logischen Ausgangssignals ein dem gespeicherten Steuerzustand zugeordneter Spannungswert ausgewertet wird, wobei dieser vorzugsweise mit einer Vergleichsspannung verglichen wird. Nach einer entsprechende Weiterbildung des Verfahrens ist die Vergleichsspannung darüber hinaus veränderbar.

Bei Verwendung einer erfindungsgemäßen Schaltungsanordnung in einer Transponder-Vorrichtung, insbesondere einem RF-Transponder, ist Letztere vorzugsweise durch ein logisches Ausgangssignal der Schaltungsanordnung steuerbar. Entsprechend zeichnet sich auch eine Weiterbildung der erfindungsgemäßen Transponder-Vorrichtung dadurch aus, dass die Transponder Vorrichtung durch ein logisches Ausgangssignal der Schaltungsanordnung steuerbar ist. Gleiches gilt im Zuge der Erfindung auch für die o.g. Remote Sensoren.

In äußerst bevorzugter Weiterbildung des erfindungsgemäßen Verfahrens zum Steuern einer Transponder-Vorrichtung oder eines Remote Sensors wird diese(r) durch das Steuersignal wahlweise stumm oder aktiv für eine Kommunikation mit einer Basisstation geschaltet, wobei das Stummschalten der Transponder-Vorrichtung bzw. des Sensors vorzugsweise nach erfolgter Kommunikation mit der Basisstation geschieht. Dadurch erhöht sich die Sicherheit von im Zuge einer Verwendung mehrerer Transponder-Vorrichtungen und/oder Sensoren anzuwendender Antikollisions-Prozeduren, da es erfindungsgemäß nicht zu Interferenzen in der Kommunikation mit bereits abgefragten und noch abzufragenden Transponder-Vorrichtungen oder Sensoren kommt.

Die vorstehend aufgeführten Überlegungen samt der sich daraus ergebenden Vorteile gelten ― wie bereits gesagt ― auch für Remote Sensoren.

Weitere Eigenschaften und Vorteile der Erfindung ergeben sich aus der nachfolgenden Beschreibung von Ausführungsbeispielen erfindungsgemäßer Transponder-Vorrichtungen anhand der Zeichnung. Es zeigt:
- Fig. 1: eine schematische Darstellung einer erfindungsgemäßen Anordnung von Transponder-Vorrichtungen mit einer Basisstation in einem gemeinsamen Wellenfeld;
- Fig. 2: ein Blockschaltbild einer erfindungsgemäßen Transponder-Vorrichtung;
- Fig. 3: ein Schaltschema einer ersten Baugruppe der erfindungsgemäßen Transponder-Vorrichtung;
- Fig. 4: ein Schaltschema einer ersten erfindungsgemäßen Schaltungsan-ordnung als zweite Baugruppe der erfindungsgemäßen Transpon-der-Vorrichtung; und
- Fig. 5: ein Schaltschema einer zweiten erfindungsgemäßen Schaltungsan-ordnung als zweite Baugruppe der erfindungsgemäßen Transpon-der-Vorrichtung.

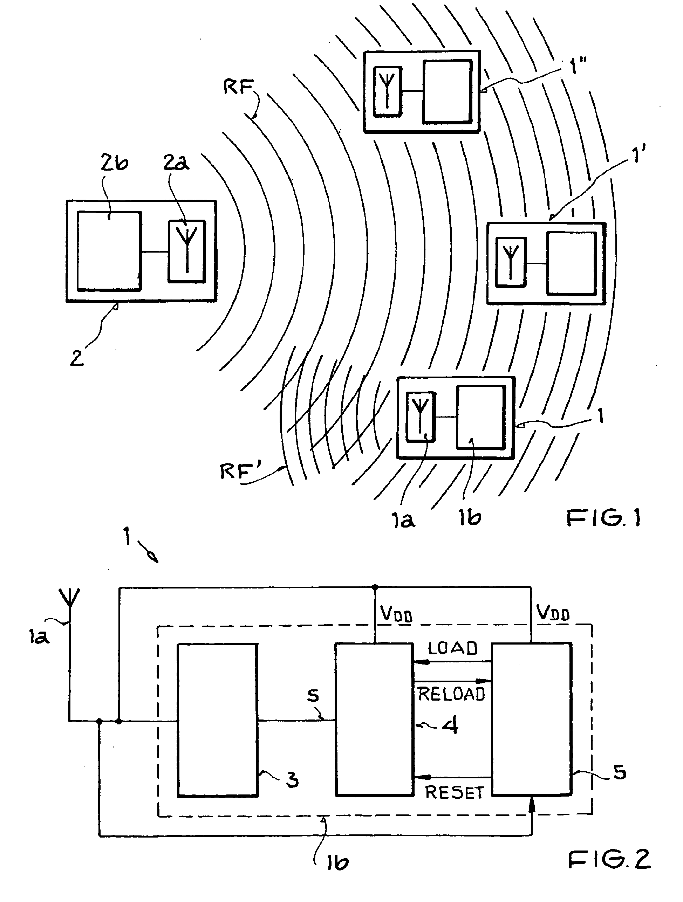

Die Fig. 1 zeigt in einer schematischen Darstellung einer Anzahl von Transponder-Vorrichtungen 1, 1', 1 ", die gemeinsam in einem von einer Basisstation 2 ausgesandten RF-Wellenfeld RF angeordnet sind. Die Transponder-Vorrichtungen 1, 1', 1" weisen gemäß der Darstellung der Fig. 1 jeweils eine Sende- und Empfangseinrichtung 1 a in Form einer (Dipol-)Antenne sowie mit dieser in Wirkverbindung stehende weitere Schaltkreise 1 b auf, insbesondere in Form eines integrierten Schaltkreises (IC), dessen erfindungsgemäß wichtige Komponenten im Folgenden anhand der Fig. 2 bis 5 näher erläutert werden. Die Basisstation 2, auch als (RFID-)Reader bezeichnet, weist zusätzlich zu einer Sende- und Empfangseinrichtungen 2a ebenfalls weitere Schaltkreise 2b auf, beispielsweise Modulatoren, Demodulatoren, Verstärker, Frequenzgeneratoren und/oder Mikrocontroller.

Die Transponder-Vorrichtungen 1, 1', 1" sind erfindungsgemäß als passive Baugruppen ausgebildet, d.h. sie verfügen über keine eigene Energieversorgung und werden über ihre Empfangseinrichtungen 1a aus dem Wellenfeld RF durch die Basisstation 2 mit elektromagnetischer Energie versorgt. Die Schaltkreise 2b der Basisstation 2 sind in hier nicht näher bezeichneter und dem Fachmann bekannter Weise zum Senden und Empfangen von RF-Signalen und zu deren digitaler Auswertung in ausgebildet. Wie anhand der Transponder-Vorrichtung 1" exemplarisch dargestellt, kommunizieren die Transponder-Vorrichtungen 1,1', 1" ihrerseits im RF-Frequenzbereich mit der Basisstation 2 (Wellenfeld RF'), beispielsweise bei der Abfrage von in den Schaltkreisen 1 b in den Transponder-Vorrichtungen 1, 1', 1" gespeicherte Daten, wie eine Identifizierungs-Nummer (ID). Im Falle von Remote Sensoren (nicht gezeigt) handelt es sich dagegen bei den Daten vorzugsweise um zu übertragende Messwerte.

Die Fig. 2 zeigt anhand eines schematischen Blockschaltbilds eine erfindungsgemäße Transponder-Vorrichtung 1. Diese weist, wie bereits vorstehend anhand der Fig. 1 erläutert, eine Sende- und Empfangseinrichtung 1 a sowie mit dieser verbundene weitere Schaltkreise 1 b auf. Letztere sind hierbei als ein Eingangsschaltkreis 3, eine erfindungsgemäße Schaltungsanordnung 4 sowie ein Lese-/Speicher-Schaltkreis 5 (ggf. Messschaltkreis im Fall von Remote Sensoren) dargestellt. Auf Grund der Ausbildung der Transponder-Vorrichtung 1 als passive Baugruppe dient die Sende- und Empfangseinrichtung 1 a sowohl zum Empfangen von Daten von der Basisstation 1 (Fig. 1) und zum Senden von Daten an die Basisstation 1 als auch zur Energieversorgung (Versorgungsspannung V_{DD}) der weiteren Schaltkreise 1 b, insbesondere der Schaltungsanordnung 4 und des Lese-/Speicher-Schaltkreises 5. Dazu weist eine erfindungsgemäße Transponder-Vorrichtung 1 regelmäßig auch ein geeignetes Spannungs-Umformmittel (nicht gezeigt), wie eine Diodengleichrichterbrücke, zum Erzeugen eines Gleichspannungssignals V_{DD} aus der mittels der Sende- und Empfangseinrichtung 1a aufgenommenen Wechselspannungs-Energie auf, was dem Fachmann geläufig ist.

Der Lese-/Speicher-Schaltkreis 5 beinhaltet geeignete Speichermittel (nicht gezeigt) zum Speichern zumindest von zu lesenden Daten der Transponder-Vorrichtung 1. Die Pfeile LOAD, RELOAD, RESET zwischen der Schaltungsanordnung 4 und dem Lese-/Speicher-Schaltkreis 5 zeigen Signalübertragungen zwischen den genannten Bestandteilen der Transponder-Vorrichtung 1 an und werden weiter unten noch näher erläutert. Die Bezeichnung POR steht für einen Power-on-Reset des Schaltkreises 5.

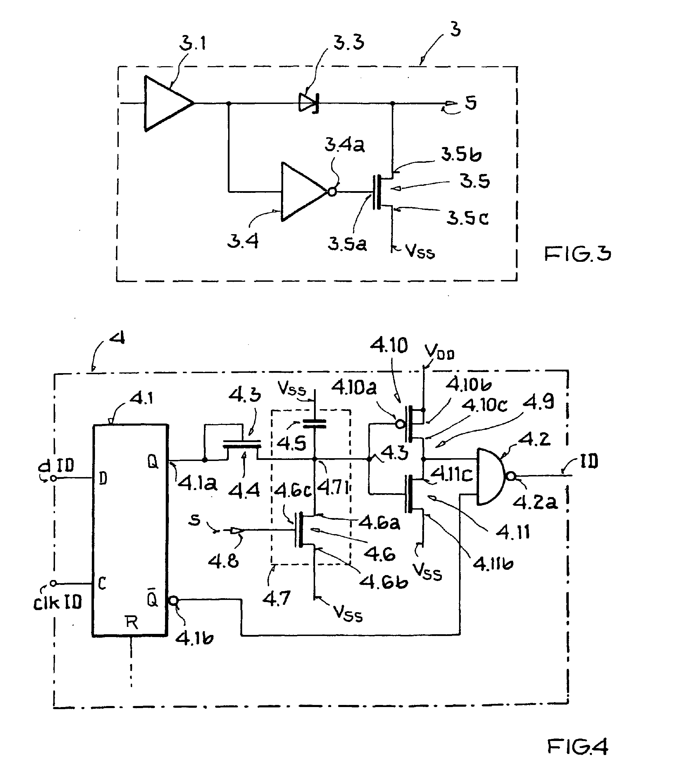

Die detaillierte Ausgestaltung des Eingangsschaltkreises 3 sowie der Schaltungsanordnung 4 und deren Wechselwirkung untereinander sowie mit dem Lese-/Speicher-Schaltkreis 5 werden im Folgenden anhand der Fig. 3, 4 und 5 näher erläutert.

Die Fig. 3 zeigt in einem detaillierten Schaltschema den erfindungsgemäßen Eingangsschaltkreis 3 der Transponder-Vorrichtungen 1, 1', 1 ", der gemäß dem gezeigten Ausführungsbeispiel vollständig monolithisch integriert ausgebildet ist. Der Eingangsschaltkreis 3 weist einen Eingang 3.1 für ein Steuersignal und einen Ausgang 3.2 für das Steuersignal auf. Zwischen dem Eingang 3.1 und dem Ausgang 3.2 ist gemäß der Fig. 3 ein elektrisches Ventilmittel in Form einer Schottky-Diode 3.3 angeordnet. Parallel zu der Schottky-Diode 3.3 weist der Eingangsschaltkreis 3 ein Invertermittel 3.4 auf, dessen Ausgang 3.4a mit dem Gate 3.5a eines FeldeffektTransistors 3.5 verbunden ist. Der Source-Anschluss 3.5b des Transistors 3.5 liegt auf dem Potenzial am Ausgang 3.2 des Eingangsschaltkreises 3, während der Drain-Anschluss 3.5c auf Substratpotenzial Vss liegt.

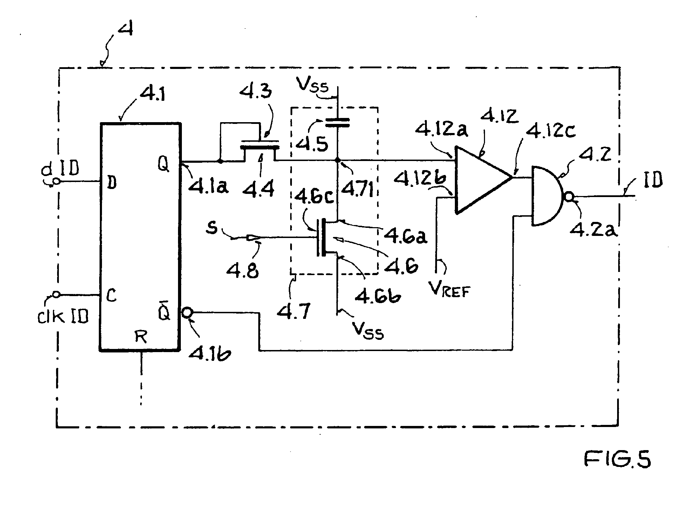

Bei dem Steuersignal am Eingang 3.1 kann es sich erfindungsgemäß beispielsweise um ein Reset-Signal handeln. Dieses zeichnet sich durch eine gegenüber dem Substratpotenzial stratpotenzial V_{SS} positive Spannung aus, so dass beim Anliegen eines solchen Signals am Eingang 3.1 ein Durchlassstrorn durch die Schottky-Diode 3.3 fließt, die im Gegensatz zu normalen Dioden im Durchlasszustand praktisch keine Ladungsspeicherung aufweist und daher als extrem schnelle Schaltdiode ohne messbare Sperrverzögerung fungiert, wodurch am Ausgang des Eingangeschaltkreises 3 ein definiertes Statussignal S (HIGH-Pegel) vorliegt, das - wie nachfolgend anhand der Fig. 4 und 5 beschrieben - als Steuersignal (Statussignal) für die erfindungsgemäße Schaltungsanordnung 4 verwendet wird. Liegt am Eingang 3.1 des Eingangsschaltkreises 3 kein (Reset-)Signal an, so sorgt das Invertermittel 3.4 dafür, dass der Transistor 3.5 leitend geschaltet ist, so dass der Ausgang des Eingangsschaltkreises 3 definiert auf Substratpotenzial V_{SS} liegt.

Der Eingangsschaltkreis 3 ist vorzugsweise zusammen mit der nachfolgend beschriebenen Schaltungsanordnung 4 und dem Lese-/Speicher-Schaltkreis 5 monolithisch integriert ausgebildet.

Die Fig. 4 zeigt anhand eines detaillierten Schaltschemas eine erste erfindungsgemäße Ausgestaltung der Schaltungsanordnung 4. Diese weist zunächst einen Eingang für Daten d_ID sowie einen Eingang für einen Takt clk_ID auf, wobei die entsprechenden Signale d_ID, clk_ID vom Lese-/Speicher-Schaltkreis 5 geliefert werden, was in der Fig. 2 anhand des Pfeils LOAD dargestellt ist. Letzter fungiert daher bezüglich der Schaltungsanordnung 4 als "State-Machine", wie nachfolgend noch deutlicher werden wird.

Mit den genannten Eingängen der Schaltungsanordnung 4 ist der Dateneingang (D-Eingang; D) bzw. der Takteingang C eines ersten Speichermittels in Form eines D-Flip-Flops 4.1 verbunden. Das D-Flip-Flop 4.1 weist weiterhin zwei Ausgänge 4.1a, 4.1b auf, wobei der Ausgang 4.1b zum Liefern des invertierten Ausgangssignals am Ausgang 4.1a ausgebildet ist. Der Ausgang 4.1 b ist direkt mit einen Eingang eines NAND-Gatters 4.2 verbunden. Darüber hinaus ist in Fig. 4 ein Reset-Eingang R dargestellt.

Dem Ausgang 4.1a des D-Flip-Flops 4.1 ist eine Stromquelle 4.3 in Form eines Feldeffekt-Transistors 4.4 mit kurzgeschlossenen Gate- und Source-Anschlossen nach Jeweils mit dem Drain-Anschluss des Transistors 4.4 verbunden weist die Schaltungsanordnung 4 einen Kondensator 4.5 und einen weiteren Feldeffekt-Transistor 4.6 auf, die untereinander zwecks Schaffung eines zweiten Speichermittels 4.7 in Reihe geschaltet sind. Ein Anschluss des Kondensators 4.5 ist mit dem Drain-Anschluss 4.6a des Transistors 4.6 an einem Knoten 4.71 verschaltet, während sich der zweite Anschluss des Kondensators 4.5 sowie der Source-Anschluss 4.6b des Transistors 4.6 jeweils auf Substratpotenzial V_{SS} befinden. Der Gate-Anschluss 4.6c des Transistors 4.6 ist mit einem Eingang 4.8 für das am Ausgang 3.2 (Fig.3) der Eingangsschaltung 3 anliegende Statussignal S verbunden.

Dem zweiten Speichermittel 4.7 nachgeschaltet weist die erfindungsgemäße Schaltungsanordnung 4 eine Schaltstufe 4.9 aus zwei parallel geschalteten MOSFET-Transistoren 4.10 (PMOS), 4.11 (NMOS) auf. Der PMOS-Transistor 4.10 ist mit seinem Gate 4.10a an den Knoten 4.71 und mit seinem Drain- und Bulk-Anschluss 4.10b bzw. 4.10b' an die beispielsweise durch die erwähnte Dioden-Gleichrichterbrücke gelieferte Versorgungsspannung V_{DD} *(diode drop)* angeschlossen. Der NMOS-Transistor 4.11 ist ebenfalls mit seinem Gate 4.11a mit dem Knoten 4.71 verschaltet, während sich sein Drain-Anschluss 4.11 b auf Substratpotenzial V_{SS} befindet. Die Transistoren 4.10, 4.11 sind über ihre Source-Anschlüsse 4.10c, 4.11c miteinander verbunden. Weiterhin stehen die Source-Anschlüsse der Transistoren 4.10, 4.11 mit dem zweiten Anschluss des NAND-Gatters 4.2 in Verbindung, das darüber hinaus einen Ausgang 4.2a aufweist, der zugleich den Ausgang der Schaltungsanordnung 4 bildet. An diesen ist, wie aus der Fig. 2 bereits ersichtlich wurde, der Lese-/Schreibschaltkreis 5 einer erfindungsgemäßen Transponder-Vorrichtung 1 angeschlossen.

Die in der Fig. 4 dargestellte Schaltung 4 lässt sich im Rahmen der Erfindung als Statusregister verstehen. Sie unterstützt eine Antikollisions-Prozedur dahingehend, dass nach einer Erfassung des Tags 1 durch die Basisstation 2 (vgl. Fig. 1) das erste Speichermittel (D-Flip-Flop) 4.1 mittels eines geeigneten, von der Empfangseinrichtung 1a des Tags 1 zu empfangenden Steuersignals nach Maßgabe durch den Lese-/Speicher-Schaltkreis 5 (Signale d_ID, clk_ID) "gesetzt" wird, d.h. den Wert Eins (1) annimmt. Dazu muss bei D und C gleichzeitig ein HIGH-Pegel-Signal (Datensignal bzw. Taktsignal/Taktpuls) anliegen. An den Ausgängen 4.1 a, 4.1 b des Flip-Flops 4.1 ergeben sich so die Werte Q = 1 und Q̅ = 0, wobei Letzterer, solange das Tag mit Spannung versorgt ist, gemäß der Fig. 4 unmittelbar an das NAND-Gatter 4.2 weitergeleitet wird. Erfindungsgemäß wird nun der Transponder 1, 1', 1" (Fig. 1) bei gesetztem Statusregister nicht völlig abgeschaltet, sondern lediglich in einen stummen, inaktiven Zustand versetzt (stumm geschaltet). Das bedeutet, dass sich der Tag so lange nicht mehr an der Kommunikation mit der Basisstation beteiligt, bis er von dieser einen entsprechenden, neuen Befehl empfängt, durch den das Statusregister wieder auf einen Wert Q = 0 gesetzt wird.

Während zunächst das Signal Q = 0 (LOW-Pegel) unmittelbar an einem Eingang des NAND-Gatters 4.2 anliegt, ist betreffend das Signal Q entscheidend, ob am Eingang 4.8 ein (Reset-)Signal S anliegt oder nicht. Liegt kein Reset-Signal an, so sperrt der Transistor 4.6 und der Kondensator 4.5 wird aufgeladen. Da die Schaltstufe 4.9 als CMOS-Inverter fungiert, liegt am zweiten Eingang des NAND-Gatters 4.2 ebenfalls ein LOW-Pegel-Signal, so dass dieses am Ausgang 4.2a den logischen Wert Eins (1) als logisches Ausgangssignal ID liefert, der bzw. das erfindungsgemäß zum Stummschalten des Tags verwendet wird. Die Signalübertragung von der Schaltungsanordnung 4 zum Lese-/Speicher-Schaltkreis 5 ist in Fig. 2 anhand des Pfeils RELOAD dargestellt.

Im umgekehrten Fall (Q = 0) liefert die Schaltstufe 4.9 ein HIGH-Pegel-Signal, was am Ausgang 4.2a des NAND-Gatters 4.2 wegen Q = 1 den Wert Null (0) als logisches Ausgangssignal ID ergibt (Tag nicht stumm geschaltet). Dabei ist der Kondensator 4.5 nicht aufgeladen; er fungiert demnach im Rahmen der Erfindung als "Bitspeicher" für den Antikollisionsbetrieb des Tags, mittels dessen sich Statusbits (Steuerzustände) über Feldlücken erhalten lassen, während derer das D-Flip-Flop 4.1 aufgrund mangelnder Spannungsversorgung seinen Steuerzustand Q, Q̅ sonst nicht halten könnte. Im Gegensatz zum eingangs beschriebenen Stand der Technik fungiert der Kondensator 4.5 also nicht als Pufferspeicher für die Energieversorgung des IC, so dass ein entsprechender Flächenbedarf stark reduziert ist.

Dabei kann das Tag erfindungsgemäß während der Antikollisions-Prozedur bzw. nach Stummschaltung zu jedem Zeitpunkt von der Basisstation angesprochen und ggf. umgeschaltet werden. Nach Verlassen einer Feldlücke (Versorgungslücke) mit einer Zeitdauer unterhalb der charakteristischen Entladezeit *t* des Kondensators 4.5 nimmt das Tag nicht automatisch wieder an der Kommunikation mit der Basisstation 2 teil, da es erfindungsgemäß seinen vorherigen Steuerzustand über das Statusregister gespeichert hat. Die Antikollisions-Prozedur wird auf diese Weise wesentlich sicherer.

Um zu gewährleisten, dass das Tag diesen Zustand auch bei Auftreten einer Feldlücke des RF-Feldes RF (Fig. 1) beibehält, ist demnach erfindungsgemäß das zweite Speichermittel 4.7 (Transistor 4.6 und Kondensator 4.5) vorgesehen. Der Kondensator 4.5 wird in seiner Funktion als elektrischer Energiespeicher für Q = 1 geladen (wenn kein Reset-Signal S am Eingang 4.8 anliegt) und für Q = 0 nicht. Je nach seiner konkreten Ausgestaltung entlädt sich der Kondensator 4.5 im Falle einer Versorgungslücke in einer charakteristischen Zeit *t*, die je nach Temperatur bis zu 9 s bei 25°C betragen kann und die vorzugsweise für typische Anwendungen bei *t* = 2 s liegt. Während dieser Zeit ist der Kondensator 4.5 damit in der Lage, den Steuerzustand Q ∈ 0, 1 des ersten Speichermittels 4.1 zu halten. Wenn an Eingang 4.8 ein Reset-Signal S anliegt (vgl. Fig. 3), dann ist der Transistor 4.6 innerhalb des zweiten Speichermittels 4.7 leitend geschaltet, und der Kondensator 4.5 wird ― unabhängig vom derzeitigen Steuerzustand des Statusregisters ― entladen, so dass er beim neuen Setzen des Registers zum Halten des dann aktuellen Steuerzustands bereit ist. Ein entsprechendes Signal für das D-Flip-Flop 4.1 liefert an dessen Eingang R der Lese-/Speicher-Schaltkreis 5 (Pfeil RESET in Fig. 2).

Die Status-Haltezeit *t* der erfindungsgemäßen Schaltungsanordnung 4 hängt bei der Ausgestaltung gemäß Fig. 4 von der Schaltschwelle des CMOS-Inverters 4.9 ab, der als Auswerteschaltung für eine Höhe der Spannung des zweiten Speichermittels 4.7 am Knoten 4.71 dient. Die Schaltschwelle lässt sich durch Anpassen der Weite-Länge-Verhältnisse W/L der MOSFET-Transistoren 4.10, 4.11 beeinflussen. Insbesondere bewirkt ein vergrößertes W/L des NMOS 4.11, ggf. bei zugleich verringertem W/L des PMOS 4.10, ein Absenken der Schaltschwelle; im umgekehrten Fall steigt die Schaltschwelle. In der Folge ergibt sich bei abgesenkter Schaltschwelle eine längere Haltezeit *t,* wohingegen eine hohe Schaltschwelle mit einer kürzeren Haltezeit *t* einhergeht.

Die Fig. 5 zeigt abschließend anhand eines weiteren detaillierten Schaltschemas eine zweite erfindungsgemäße Ausgestaltung der Schaltungsanordnung 4, die im Wesentlichen derjenigen aus der Fig. 4 entspricht. ist. Es sei daher im Folgenden nur auf die Unterschiede zwischen den beiden Ausführungsformen und deren Bedeutung im Rahmen der vorliegenden Erfindung eingegangen:

Gemäß der Fig. 5 weist die erfindungsgemäße Schaltungsanordnung 4 an Stelle der CMOS-Schaltstufe 4.9 einen Operationsverstärker 4.12 in Anwendung als Komparator auf, wobei die Betriebsspannungsanschlüsse des Verstärkers 4.12 ― wie allgemein üblich ― im Schaltbild nicht eingetragen sind.

Der Komparator 4.12 weist einen ersten Eingang 4.12a ("N-Eingang"), einen zweiten Eingang 4.12b ("P-Eingang") sowie einen Ausgang 4.12c auf, wobei der erste Eingang 4.12a an dem Knoten 4.71 angeschlossen ist. Am P-Eingang 4.12b ist eine vorgegebene, dabei vorzugsweise jedoch modifizierbare Vergleichsspannung V_{REF} angelegt. Der Ausgang 4.12c ist wie zuvor die Source-Anschlüsse 4.10c, 4.11 c (Fig. 4) der Schaltstufe 4.9 mit dem zweiten Anschluss des NAND-Gatters 4.2 verbunden.

Im Betrieb der Schaltungsanordnung 4 wirkt sich der Komparator 4.12 folgendermaßen aus: Sobald die Signalspannung am N-Eingang 4.12a die Vergleichsspannung V_{REF} übersteigt, geht der Ausgang 4.12c in die negative Sättigung und umgekehrt, wobei sich selbstverständlich durch Vertauschen der beiden Eingänge des Komparators grundsätzlich auch ein Verhalten mit umgekehrter Phase erreichen lässt. Durch geeignete Wahl der Vergleichsspannung V_{REF} lässt sich also wiederum die Schaltschwelle zur Auswertung der Höhe der Spannung des zweiten Speichermittels 4.7 am Knoten 4.71 nach Art eines Fensterdiskriminators gezielt beeinflussen. Mit anderen Worten: Der Komparator 4.12 vergleicht die Spannung am Knoten 4.71 mit einem bestimmten Referenzwert V_{REF} und liefert als Ergebnis dieses Vergleichs einen definierten (verstärkten) Spannungswert an seinem Ausgang 4.12c bzw. am entsprechenden Eingang des logischen Gatters 4.2, nämlich einen hohen Spannungswert (HIGH-Pegel) entsprechend einer logischen Eins, wenn die Spannung am Knoten 4.71 kleiner ist als V_{REF}, und einen niedrigen Spannungswert (LOW-Pegel; logische Null) für den umgekehrten Fall. Die Signalverarbeitung durch das NAND-Gatter 4.2 geschieht anschließend, wie bereits anhand der Fig. 4 eingehend erläutert.

### Bezugszeichenliste

- 1,1' 1": Transponder(-Vorrichtung), Tag
- 1 a: Empfangseinrichtung
- 1 b: Schaltkreise
- 2: Basisstation
- 2a: Empfangseinrichtung
- 2b: Schaltkreise
- 3: Eingangsschaltkreis
- 3.1: Eingang
- 3.2: Ausgang
- 3.3: Schottky-Diode
- 3.4: Invertermittel
- 3.4a: Ausgang
- 3.5: Transistor, FET
- 3.5a: Gate
- 3.5b: Source
- 3.5c: Drain
- 4: Schaltungsanordnung
- 4.1: erstes Speichermittel, D-Flip-Flop

- 4.2: NAND-Gatter
- 4.3: Stromquelle
- 4.4: Transistor, FET
- 4.4a: Gate
- 4.4b: Source
- 4.4c: Drain
- 4.5: Kondensator
- 4.6: Transistor, FET
- 4.6a: Drain
- 4.6b: Source
- 4.6c: Gate
- 4.7: zweites Speichermittel
- 4.71: Knoten
- 4.8: Eingang
- 4.9: Schaltstufe
- 4.10: PMOS
- 4.10a: Gate
- 4.10b: Source
- 4.10c: Drain
- 4.11: NMOS
- 4.11a: Gate
- 4.11 b: Source
- 4.11 c: Drain
- 4.12: Operationsverstärker, Komparator
- 4.12a: erster Eingang (N-Eingang)

- 4.12b: zweiter Eingang (P-Eingang)
- 4.12c: Ausgang
- 5: Lese-/Speicher-Schaltkreis
- clk_ID: Taktsignal
- d_ID: Datensignal
- D: Dateneingang
- C: Takteingang
- ID: Ausgangssignal
- LOAD: Signal
- Q, Q̅: Ausgabewert
- R: Reset-Eingang
- RELOAD: Signal
- RESET: Signal
- S: Reset-Signal
- *t, t*ₘₐₓ: (Entlade-)Zeit
- V_{DD}: Versorgungsspannung
- V_{REF}: Vergleichsspannung
- V_{SS}: Substratpotenzial

## Patentansprüche

1. Schaltungsanordnung (4) für RF- Transponder oder Remote Sensoren, mit einer Empfangseinrichtung (1a) zum Empfangen eines elektrischen Steuersignals, mit einem ersten Speichermittel (4.1) zum Speichern eines Steuerzustands (Q, ) der Schaltungsanordnung (4) in Abhängigkeit von dem Steuersignal (d_ID, clk_ID), mit einem zweiten Speichermittel (4.7) zum Halten des Steuerzustands (Q, Q̅) bei mangelnder Spannungsversorgung der Schaltungsanordnung (4), das zum Speichern elektrischer Energie einen Kondensator (4.5) aufweist, das mit einem Ausgang für ein Ausgangssignal (ID) der Schaltungsanordnung (4) verbunden ist und das ein Schaltmittel (4.6) aufweist, welches zum Aufladen des zweiten Speichermittels (4.7) mit elektrischer Energie durch ein weiteres Steuersignal (S; Reset) steuerbar ist,
**dadurch gekennzeichnet, dass**
das Schaltmittel (4.6) und der Kondensator (4.5) zueinander in Reihe sowie jeweils parallel zu und in Wirkverbindung mit dem Ausgang des ersten Speichermittels (4.1) geschaltet sind, wobei das Schaltmittel (4.6) mit seinem dem Kondensator abgewandten Anschluss auf einem zum Entladen des Kondensators (4.5) nach Maßgabe des weiteren Steuersignals (S; Reset) über das Schaltmittel (4,6) geeigneten Potential (V_{SS}) liegt,

2. Schaltungsanordnung nach Anspruch 1, **dadurch gekennzeichnet, dass** das erste Speichermittel (4.1) ein durch das Steuersignal (d_ID, clk_ID) schaltbares logisches Speichermittel ist.

3. Schaltungsanordnung nach Anspruch 1 oder 2, **dadurch gekennzeichnet, dass** das erste Speichermittel (4.1) durch ein weiteres Steuersignal (S; Reset) steuerbar, insbesondere in einen definierten Zustand setzbar, ist.

4. Schaltungsanordnung nach Anspruch 3, **dadurch gekennzeichnet, dass** das zweite Speichermittel (4.7) bei Ansteuerung mittels des weiteren Steuersignals (S; Reset) für das erste Speichermittel (4.1) entladbar ist.

5. Schaltungsanordnung nach einem der Ansprüche 1 bis 4, **dadurch gekennzeichnet, dass** das erste Speichermittel (4.1) ein D-Flip-Flop ist.

6. Schaltungsanordnung nach einem der Ansprüche 1 bis 5, **dadurch gekennzeichnet, dass** das zweite Speichermittel (4.7) zum Halten des Steuerzustands (Q, Q̅) während einer Zeit *t* mit 0 < *t* ≤*t*ₘₐₓ ausgebildet ist.

7. Schaltungsanordnung nach einem der Ansprüche 1 bis 6, **dadurch gekennzeichnet, dass** das zweite Speichermittel (4.7) einen Kondensator (4.5) aufweist.

8. Schaltungsanordnung nach Anspruch 6 oder 7, **dadurch gekennzeichnet, dass** *t*ₘₐₓ ≈9 s beträgt.

9. Schaltungsanordnung nach einem der Ansprüche 6 bis 8, **dadurch gekennzeichnet, dass** *t* ≈2 s beträgt.

10. Schaltungsanordnung nach einem der Ansprüche 1 bis 9, **dadurch gekennzeichnet, dass** die Empfangseinrichtung (1a) weiterhin zum Empfangen elektromagnetischer Energie zum Versorgen zumindest der Schaltungsanordnung (4) ausgebildet ist.

11. Schaltungsanordnung nach einem der vorangehenden Ansprüche, **gekennzeichnet durch** ein Schwellwert-Schaltmittel (4.9, 4.12) für die Auswertung eines dem Steuerzustand (Q, Q̅) zugeordneten Spannungswerts, das zum Erzeugen eines logischen Ausgangssignals (ID) der Schaltungsanordnung (4) ausgebildet ist.

12. Schaltungsanordnung nach Anspruch 11, **dadurch gekennzeichnet, dass** das Schwellwert-Schaltmittel als CMOS-Schaltstufe (4.9) ausgebildet ist.

13. Schaltungsanordnung nach Anspruch 11, **dadurch gekennzeichnet, dass** das Schwellwert-Schaltmittel als Komparator (4.12) ausgebildet ist.

14. Schaltungsanordnung nach einem der Ansprüche 11 bis 13, **dadurch gekennzeichnet, dass** die Schaltschwelle des Schweilwert-Schaltmittels (4.9, 4.12) veränderbar ist.

15. Verwendung einer Schaltungsanordnung nach einem der Ansprüche 1 bis 14 in einer Transponder-Vorrichtung (1, 1', 1 "), insbesondere einem RF-Transponder, oder einem Remote Sensor.

16. Verwendung nach Anspruch 15, **dadurch gekennzeichnet, dass** die Transponder-Vorrichtung (1, 1', 1 ") oder der Remote Sensor durch ein logisches Ausgangssignal (ID) der Schaltungsanordnung (4) steuerbar ist.

17. Transponder-Vorrichtung, **gekennzeichnet durch** eine Schaltungsanordnung (4) nach einem der Ansprüche 1 bis 14.

18. Transponder-Vorrichtung nach Anspruch 17, **dadurch gekennzeichnet, dass** die Transponder-Vorrichtung (1, 1', 1") durch ein logisches Ausgangssignal (ID) der Schaltungsanordnung (4) steuerbar ist.

19. Transponder-Vorrichtung nach Anspruch 17 oder 18, **gekennzeichnet durch** eine Lese-/Speichereinrichtung (5) in signaltechnischer Wirkverbindung mit der Schaltungsanordnung (4) zum Liefern des Steuersignals (d_ID, clk_ID).

20. Transponder-Vorrichtung nach Anspruch 19, **dadurch gekennzeichnet, dass** die Lese-/Speichereinrichtung (5) zum Empfangen eines logischen Ausgangssignals (ID) der Schaltungsanordnung (4) ausgebildet ist.

21. Remote Sensor, **gekennzeichnet durch** eine Schaltungsanordnung (4) nach einem der Ansprüche 1 bis 14.

22. Remote Sensor nach Anspruch 21, **dadurch gekennzeichnet, dass** der Remote Sensor durch ein logisches Ausgangssignal (ID) der Schaltungsanordnung (4) steuerbar ist.

23. Remote Sensor nach Anspruch 21 oder 22, **gekennzeichnet durch** eine Lese-/ Speichereinrichtung (5) in signaltechnischer Wirkverbindung mit der Schaltungsanordnung (4) zum Liefern des Steuersignals (d_ID, clk_ID).

24. Remote Sensor nach Anspruch 23, **dadurch gekennzeichnet, dass** die Lese-/Speichereinrichtung (5) zum Empfangen eines logischen Ausgangssignals (ID) der Schaltungsanordnung (4) ausgebildet ist.

25. Anordnung von Transponder-Vorrichtungen mit einer Basisstation zumindest zum Senden von Steuersignalen an die Transponder-Vorrichtungen, **gekennzeichnet durch** Transponder-Vorrichtungen (1, 1', 1 ") gemäß einem der Ansprüche 17 bis 20.

26. Anordnung von Remote Sensoren mit einer Basisstation zumindest zum Senden von Steuersignalen an die Remote Sensoren, **gekennzeichnet durch** Remote Sensoren gemäß einem der Ansprüche 21 bis 24.

27. Verfahren zum Steuern einer Transponder-Vorrichtung (1, 1', 1") oder eines Remote Sensors, wobei zumindest ein Steuersignal (d_ID, clk_ID) mittels einer Empfangseinrichtung (1a) der Transponder-Vorrichtung oder des Remote Sensors empfangen und ein entsprechender Steuerzustand (Q, Q̅) der Transponder-Vorrichtung oder des Remote Sensors in Abhängigkeit von dem Steuer signal durch ein erstes Speichermittel (4.1) einer Schaltungsanordnung (4) der Transponder-Vorrichtung oder des Remote Sensors gespeichert wird, wobei im Falle mangelnder Spannungsversorgung der Transponder-Vorrichtung oder des Remote Sensors der Steuerzustand während einer Zeit t durch ein zweites Speichermittel (4.7) der Schaltungsanordnung gespeichert wird wobei bei einem ersten Zustand eines weiteren Steuersignals (S) ein Schaltmittel (4.6) in dem zweiten Speichermittel (4.7) in einen ersten Schaltzustand geschaltet und **dadurch** das zweite Speichermittel (4.7) mit elektrischer Energie aufgeladen wird,
**dadurch gekennzeichnet, dass**
bei einem zweiten Zustand des weiteren Steuersignals (S) das Schaltmittel (4.6) in einen zweiten Schaltzustand geschaltet und **dadurch** die in dem zweiten Speichermittel (4.7) gespeicherte elektrische Energie über das Schaltmittel (4.6) entladen wird.

28. Verfahren nach Anspruch 27, **dadurch gekennzeichnet, dass** durch ein weiteres Steuersignal das erste Speichermittel in einen definierten Zustand versetzt, insbesondere zurückgesetzt, wird.

29. Verfahren nach Anspruch 28, **dadurch gekennzeichnet, dass** es sich bei den weiteren Steuersignalen für das erste und zweite Speichermittel um ein gemeinsames Steuersignal handelt.

30. Verfahren nach einem der Ansprüche 27 bis 29, **dadurch gekennzeichnet, dass** ein logisches Ausgangssignal der Schaltungsanordnung in Abhängigkeit von dem gespeicherten Steuerzustand an eine Lese-/Speichereinrichtung der Transponder-Vorrichtung oder des Remote Sensors geliefert wird und dass das Ausgangssignal von der Lese-/Speichereinrichtung aus anschließend als Steuersignal für eine Kommunikation der Transponder-Vorrichtung oder des Remote Sensors mit einer Basisstation sowie als Zustands-Eingangssignal für das erste Speichermittel verwendet wird.

31. Verfahren nach Anspruch 30, **dadurch gekennzeichnet, dass** zum Erzeugen des logischen Ausgangssignals ein dem gespeicherten Steuerzustand zugeordneter Spannungswert ausgewertet wird.

32. Verfahren nach Anspruch 31, **dadurch gekennzeichnet, dass** der Spannungswert mit einer Vergleichsspannung verglichen wird.

33. Verfahren nach Anspruch 32, **dadurch gekennzeichnet, dass** die Vergleichsspannung veränderbar ist.

34. Verfahren nach einem der Ansprüche 27 bis 33, **dadurch gekennzeichnet, dass** durch das Steuersignal die Transponder-Vorrichtung oder der Remote Sensor wahlweise stumm oder aktiv für die Kommunikation mit der Basisstation geschaltet wird.

35. Verfahren nach einem der Ansprüche 27 bis 34, **dadurch gekennzeichnet, dass** die Transponder-Vorrichtung oder der Remote Sensor nach erfolgter Kommunikation mit der Basisstation stumm geschaltet wird.

36. Verfahren zum Steuern einer Mehrzahl von Transponder-Vorrichtungen und/oder Remote Sensoren in einem gemeinsamen elektromagnetischen Wellenfeld, **dadurch gekennzeichnet, dass** jede Transponder-Vorrichtung und/oder jeder Remote Sensor gemäß einem Verfahren nach einem der Ansprüche 27 bis 35 gesteuert wird.

## Claims

1. Circuit arrangement (4) for RF transponders or remote sensors, with a receiving device (1a) for receiving an electrical control signal, with a first storage means (4.1) for storage of a control state (Q, *Q̅*) of the circuit arrangement (4) in dependence on the control signal (d_ID, clk_ID), with a second storage means (4.7) for retaining the control state (Q, *Q̅*) in the case of deficient voltage supply of the circuit arrangement (4), which for storage of electrical energy has a capacitor (4.5), which is connected with an output for an output signal (ID) of the circuit arrangement (4) and comprises a switching means (4.6) which for charging of the second storage means (4.7) with electrical energy is controllable by a further control signal (S; Reset), **characterised in that** the switching means (4.6) and the capacitor (4.5) are connected with one another in series as well as respectively parallel to and in operative connection with the output of the first storage means (4.1), wherein the switching means (4.6) lies by its connection, which is remote from the capacitor, at a potential (V_{SS}) suitable for discharging the capacitor (4.5) in dependence on the further control signal (S; Reset) by way of the switching means (4.6).

2. Circuit arrangement according to claim 1, **characterised in that** the first storage means (4.1) is a logical memory means switchable by the control signal (D_ID, clk_ID).

3. Circuit arrangement according to claim 1 or 2, **characterised in that** the first storage means (4.1) is controllable by a further control signal (S: Reset), particularly settable to a defined state.

4. Circuit arrangement according to claim 3, **characterised in that** the second storage means (4.7) is dischargeable in the case of drive control by means of the further control signal (S: Reset) for the first storage means (4.1).

5. Circuit arrangement according to any one of claims 1 to 4, **characterised in that** the first storage means (4,1) is a D flip-flop.

6. Circuit arrangement according to any one of claims 1 to 5, **characterised in that** the second storage means (4.7) is constructed for retaining the control state (Q, *Q̅*) during a time *t*, wherein 0 < *t* ≤ *t*ₘₐₓ.

7. Circuit arrangement according to any one of claims 1 to 6, **characterised in that** the second storage means (4.7) comprises a capacitor (4.5).

8. Circuit arrangement according to claim 6 or 7, **characterised in that** *tₘₐₓ* ≈9 s.

9. Circuit arrangement according to any one of claims 6 to 8, **characterised in that** *t*ₘₐₓ ≈2 s.

10. Circuit arrangement according to any one of claims 1 to 9, **characterised in that** the receiving device (1a) is additionally constructed for reception of electromagnetic energy for supply of at least the circuit arrangement (4).

11. Circuit arrangement according to any one of the preceding claims, **characterised by** a threshold value switching means (4.9, 4.12) for evaluation of a voltage value associated with the control state (Q, *Q̅*), which switching means is constructed for producing a logical output signal (ID) of the circuit arrangement (4).

12. Circuit arrangement according to claim 11, **characterised in that** the threshold value switching means is constructed as a CMOS switching stage (4.9).

13. Circuit arrangement according to claim 11, **characterised in that** the threshold value switching means is constructed as a comparator (4.12).

14. Circuit arrangement according to any one of claims 11 to 13, **characterised in that** the switching threshold of the threshold value switching means (4.9, 4.12) is variable.

15. Use of a circuit arrangement according to any one of claims 1 to 14 in a transponder device (1, 1', 1"), particularly a RF transponder or a remote sensor.

16. Use according to claim 15, **characterised in that** the transponder device (1,1',1") or the remote sensor is controllable by a logical output signal (ID) of the circuit arrangement (4).

17. Transponder device, **characterised by** a circuit arrangement (4) according to any one of claims 1 to 14.

18. Transponder device according to claim 17, **characterised in that** the transponder device (1, 1', 1") is controllable by a logical output signal (ID) of the circuit arrangement (4).

19. Transponder device according to claim 17 or 18, **characterised by** a reading/memory device (5) in operative connection in terms of signal with the circuit arrangement (4) for supply of the control signal (d_ID, clk_ID).

20. Transponder device according to claim 19, **characterised in that** the reading/memory device (5) is constructed for receiving a logical output signal (ID) of the circuit arrangement (4).

21. Remote sensor, **characterised by** a circuit arrangement (4) according to any one of claims 1 to 14.

22. Remote sensor according to claim 21, **characterised in that** the remote sensor is controllable by a logical output signal (ID) of the circuit arrangement (4).

23. Remote sensor according to claim 21 or 22, **characterised by** a reading/memory device (5) in operative connection, in terms of signal, with the circuit arrangement (4) for supply of the control signal (d_ID, clk_ID).

24. Remote sensor according to claim 23, **characterised in that** the reading/memory device (5) is constructed for receiving a logical output signal (ID) of the circuit arrangement (4).

25. Arrangement of transponder devices with a base station at least for transmission of control signals to the transponder devices, **characterised by** transponder devices (1,1',1") according to any one of claims 17 to 20.

26. Arrangement of remote sensors with a base station at least for transmission of control signals to the remote sensor, **characterised by** remote sensors according to any one of claims 21 to 24.

27. Method of controlling a transponder device (1, 1', 1") or a remote sensor, wherein at least one control signal (d_ID, clk_ID) is received by means of a receiving device (1a) of the transponder device or of the remote sensor and a corresponding control state (Q, *Q̅*) of the transponder device or of the remote sensor is stored in dependence on the control signal by a first storage means (4.1) of a circuit arrangement (4) of the transponder device or the remote sensor, wherein in the case of deficient voltage supply of the transponder device or of the remote sensor the control state is stored for a time t by a second storage means (4.7) of the circuit arrangement, wherein in the case of a first state of a further control signal (S) a switching means (4.6) in the second storage means (4.7) is switched to a first switching state and the second storage means (4.7) is thereby charged with electrical energy, **characterised in that** in the case of a second state of the further control signal (S) the switching means (4.6) is switched to a second switching state and the electrical energy stored in the second storage means (4.7) is thereby discharged by way of the switching means (4.6).

28. Method according to claim 27, **characterised in that** the first storage means is set to a defined state, in particular reset, by a further control signal.

29. Method according to claim 28, **characterised in that** the further control signals for the first and second storage means are a common control signal.

30. Method according to any one of claims 27 to 29, **characterised in that** a logical output signal of the circuit arrangement is supplied in dependence on the stored control state to a reading/memory device of the transponder device or of the remote sensor and that the output signal from the reading/memory device is subsequently used as control signal for a communication of the transponder device or of the remote sensor with a base station as well as state input signal for the first storage means.

31. Method according to claim 30, **characterised in that** a voltage value associated with the stored control state is evaluated for producing the logical output signal.

32. Method according to claim 31, **characterised in that** the voltage value is compared with a comparison voltage.

33. Method according to claim 32, **characterised in that** the comparison voltage is variable.

34. Method according to any one of claims 27 to 33, **characterised in that** the control signal of the transponder device or of the remote sensor is switched to be mute or active for the communication with the base station.

35. Method according to any one of claims 27 to 34, **characterised in that** the transponder device or the remote sensor is switched to be mute after communication with the base station has been carried out.

36. Method of controlling a plurality of transponder devices and/or remote sensors in a common electromagnetic wave field, **characterised in that** each transponder device and/or each remote sensor is controlled in accordance with a method according to any one of claims 27 to 35.

## Revendications

1. Circuit (4) pour transpondeurs RF ou capteurs à distance, comprenant un dispositif récepteur (1a) pour la réception d'un signal électrique de commande, un premier moyen de stockage (4.1) pour la mémorisation d'un état de commande (Q₁) du circuit (4) en fonction du signal de commande (d_ID, clk_ID), un deuxième moyen de stockage (4.7) pour maintenir l'état de commande (Q, Q̅) en cas d'insuffisance d'alimentation en tension du circuit (4), qui présente un condensateur (4.5) pour le stockage de l'énergie électrique, qui est relié à une sortie pour un signal de sortie (ID) du circuit (4) et qui présente un moyen de commutation (4.6) pouvant être commandé pour la charge du deuxième moyen de stockage (4.7) en énergie électrique par un signal de commande supplémentaire (S; Reset),
**caractérisé en ce que**
le moyen de commutation (4.6) et le condensateur (4.5) sont montés en série et à chaque fois en parallèle et en liaison active avec la sortie du premier moyen de stockage (4.1), le moyen de commutation (4.6) étant porté par sa borne opposée au condensateur à un potentiel (V_{SS}) adapté à la décharge du condensateur (4.5) selon le signal de commande supplémentaire (S; Reset) par l'intermédiaire du moyen de commutation (4.6).

2. Circuit selon la revendication 1, **caractérisé en ce que** le premier moyen de stockage (4.1) est un moyen de stockage logique connectable par le signal de commande (d_ID, clk_ID).

3. Circuit selon la revendication 1 ou 2, **caractérisé en ce que** le premier moyen de stockage (4.1) peut être commandé par un signal de commande supplémentaire (S; Reset), plus particulièrement être amené dans un état défini.

4. Circuit selon la revendication 3, **caractérisé en ce que** le deuxième moyen de stockage (4.7) peut être déchargé lors de l'activation au moyen du deuxième signal de commande (S; Reset) pour le premier moyen de stockage (4.1).

5. Circuit selon l'une quelconque des revendications 1 à 4, **caractérisé en ce que** le premier moyen de stockage (4.1) est un flip-flop D.

6. Circuit selon l'une quelconque des revendications 1 à 5, **caractérisé en ce que** le deuxième moyen de stockage (4.7) est conçu pour maintenir l'état de commande (Q, Q) pendant une durée t, avec 0 < *t* ≤ *t*ₘₐₓ

7. Circuit selon l'une quelconque des revendications 1 à 6, **caractérisé en ce que** le deuxième moyen de stockage (4.7) présente un condensateur (4.5).

8. Circuit selon la revendication 6 ou 7, **caractérisé en ce que** *t*ₘₐₓ est égal à environ 9 secondes.

9. Circuit selon l'une quelconque des revendications 6 à 8, **caractérisé en ce que** t est égal à environ 2 secondes.

10. Circuit selon l'une quelconque des revendications 1 à 9, **caractérisé en ce que** dispositif récepteur (1a) est de plus conçu pour la réception d'énergie électromagnétique pour alimenter au moins le circuit (4).

11. Circuit selon l'une quelconque des revendications précédentes, **caractérisé par** un moyen de commutation à valeur de seuil (4.9, 4.12) pour l'exploitation d'une valeur de tension associée à l'état de commande (Q, Q), prévu pour générer un signal logique de sortie (ID) du circuit (4).

12. Circuit selon la revendication 11, **caractérisé en ce que** le moyen de commutation à valeur de seuil est réalisé sous la forme d'un étage de commutation CMOS (4.9).

13. Circuit selon la revendication 11, **caractérisé en ce que** le moyen de commutation de valeur de seuil est réalisé sous la forme d'un comparateur (4.12).

14. Circuit selon l'une quelconque des revendications 11 à 13, **caractérisé en ce que** le seuil de commutation du moyen de commutation de valeur de seuil (4.9, 4.12) est modifiable.

15. Utilisation d'un circuit selon l'une quelconque des revendications 1 à 14 dans un dispositif transpondeur (1, 1', 1"), plus particulièrement un transpondeur RF, ou dans un capteur à distance.

16. Utilisation selon la revendication 15, **caractérisé en ce que** le dispositif transpondeur (1, 1', 1") ou le capteur à distance peuvent être commandés par un signal logique de sortie (ID) du circuit (4).

17. Dispositif transpondeur **caractérisé par** un circuit (4) selon l'une quelconque des revendications 1 à 14.

18. Dispositif transpondeur selon la revendication 17, **caractérisé en ce que** le dispositif transpondeur (1, 1', 1") peut être commandé par un signal logique de sortie (ID) du circuit (4).

19. Dispositif transpondeur selon la revendication 17 ou 18, **caractérisé par** un dispositif de lecture/stockage (5) en liaison active par la technique des signaux avec le circuit (4) pour délivrer le signal de commande (d_ID, clk_ID).

20. Dispositif transpondeur selon la revendication 19, **caractérisé en ce que** le dispositif de lecture/stockage (5) est conçu pour la réception d'un signal logique de sortie (ID) du circuit (4).

21. Capteur à distance, **caractérisé par** un circuit (4) selon l'une quelconque des revendications 1 à 14.

22. Capteur à distance selon la revendication 21, **caractérisé en ce que** le capteur à distance peut être commandé par un signal logique de sortie (ID) du circuit (4).

23. Capteur à distance selon la revendication 21 ou 22, **caractérisé par** un dispositif de lecteur/stockage (5) en liaison active par la technique des signaux avec le circuit (4) pour délivrer le signal de commande (d_ID, clk_ID).

24. Capteur à distance selon la revendication 23, **caractérisé en ce que** le dispositif de lecture/stockage (5) est conçu pour recevoir un signal logique de sortie (ID) du circuit (4).

25. Ensemble de dispositifs transpondeurs comprenant une station de base au moins pour l'émission de signaux de commande aux dispositifs transpondeurs, **caractérisé par** des dispositifs transpondeurs (1, 1', 1") selon l'une quelconque des revendications 17 à 20.

26. Ensemble de capteurs à distance comprenant une station de base au moins pour l'émission de signaux de commande aux capteurs à distance, **caractérisé par** des capteurs à distance selon l'une quelconque des revendications 21 à 24.

27. Procédé de commande d'un dispositif transpondeur (1, 1', 1") ou d'un capteur à distance, dans lequel on reçoit au moins un signal de commande (d_ID, clk_ID) au moyen d'un dispositif récepteur (1a) du dispositif transpondeur ou du capteur à distance et on stocke un état de commande correspondant (Q, Q) du dispositif transpondeur ou du capteur à distance en fonction du signal de commande au moyen d'un premier moyen de stockage (4.1) d'un circuit (4) du dispositif transpondeur ou du capteur à distance, dans lequel en cas d'insuffisance d'alimentation en tension du dispositif transpondeur ou du capteur à distance, on mémorise l'état de commande durant une durée t au moyen d'un deuxième moyen de stockage (4.7) du circuit, dans lequel lors d'un premier état d'un signal de commande supplémentaire (S), on connecte dans un premier état de commutation un moyen de commutation (4.6) dans le deuxième moyen de stockage (4.7) et on charge ainsi le deuxième moyen de stockage (4.7) en énergie électrique,
**caractérisé en ce que**
dans un deuxième état du signal de commande supplémentaire (S), le moyen de commutation (4.6) est connecté dans un deuxième état de commutation et ainsi l'énergie électrique stockée dans le deuxième moyen de stockage (4.7) est déchargée à travers le le moyen de commutation (4.6).

28. Procédé selon la revendication 27, **caractérisé en ce que** par un signal de commande supplémentaire on amène, plus particulièrement on réinitialise, le premier moyen de stockage dans un état défini.

29. Procédé selon la revendication 28, **caractérisé en ce que** pour les signaux de commande supplémentaires du premier et du deuxième moyen de stockage, il s'agit d'un signal de commande commun.

30. Procédé selon l'une quelconque des revendications 27 à 29, **caractérisé en ce qu'**un signal logique de sortie du circuit est délivré à un dispositif de lecture/stockage du dispositif transpondeur ou du capteur à distance en fonction de l'état de commande mémorisé, et **en ce que** le signal de sortie du dispositif de lecture/stockage est ensuite utilisé comme signal de commande pour une communication du dispositif transpondeur ou du capteur à distance avec une station de base, ainsi que comme signal d'entrée d'état pour le premier moyen de stockage.

31. Procédé selon la revendication 30, **caractérisé en ce que** pour générer le signal logique de sortie, on exploite une valeur de tension associée à l'état de commande mémorisé.

32. Procédé selon la revendication 31, **caractérisé en ce que** la valeur de tension est comparée à une tension de comparaison.

33. Procédé selon la revendication 32, **caractérisé en ce que** la tension de comparaison est modifiable.

34. Procédé selon l'une quelconque des revendications 27 à 33, **caractérisé en ce qu'**au moyen du signal de commande, on connecte le dispositif transpondeur ou le capteur à distance au choix muet ou actif pour la communication à la station de base.

35. Procédé selon l'une quelconque des revendications 27 à 34, **caractérisé en ce que** le dispositif transpondeur ou le capteur à distance est connecté muet à la station de base après qu'une communication ait été effectuée.

36. Procédé de commande d'une pluralité de dispositifs transpondeurs et/ou de capteurs à distance dans un champ commun d'ondes électromagnétiques, **caractérisé en ce que** chaque dispositif transpondeur et/ou chaque capteur à distance est commandé conformément à un procédé selon l'une quelconque des revendications 27 à 35.
